(19) Europäisches Patentamt
European Patent Office
Office européen des brevets

(11) Numéro de publication: **0 109 954**
**B1**

(12) **FASCICULE DE BREVET EUROPÉEN**

(45) Date de publication du fascicule du brevet: **17.12.86**

(21) Numéro de dépôt: **83870095.3**

(22) Date de dépôt: **26.09.83**

(51) Int. Cl.[4]: **C 09 J 3/00** // C08L77/12, C08L21/00

(54) **Compositions thermoplastiques adhésives.**

(30) Priorité: **27.09.82 FR 8216218**

(43) Date de publication de la demande:
**30.05.84 Bulletin 84/22**

(45) Mention de la délivrance du brevet:
**17.12.86 Bulletin 86/51**

(84) Etats contractants désignés:
**AT BE CH DE FR GB IT LI LU NL SE**

(56) Documents cité:
**EP-A-0 009 951**
**EP-A-0 041 325**
**FR-A-2 497 518**
**US-A-4 242 470**

**Le dossier contient des informations techniques présentées postérieurement au dépôt de la demande et ne figurant pas dans le présent fascicule.**

(73) Titulaire: **NORTON S.A., Allée Verte, 11, B-1000 Bruxelles (BE)**

(72) Inventeur: **Comert, Ahmet, 102 h, rue Houlteau, B-4655 Chaineux (BE)**
Inventeur: **Petit, Dominique, 60, rue de Housse, B-4512 Housse- Blegny (BE)**

(74) Mandataire: **Plucker, Guy, OFFICE KIRKPATRICK 4 Square de Meeûs, B-1040 Bruxelles (BE)**

**EP 0 109 954 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

Le présente invention concerne des compositions thermoplastiques manifestant des propriétés adhésives, c'est-à-dire des compositions couramment appelées "hot melts", et en particulier des agents et compositions de scellement thermoplasiques dits ciaprès "hot melts"

Les techniques au hot melt sont extrémement diversifiées et s'échelonnent des collages les plus faibles, par exemple en cartonnerie, aux scellements les plus difficilies, comme les assemblages métal/métal, métal/verre et verre/verre.

La demande de brevet européen EP-A-41325 a pour objet une composition adhésive obtenue en mélangeant un polyamide thermoplastique portant des groupes amino reactifs, avec un caoutchouc à groupes vinyle terminaux, de préférence un caoutchouc liquide à groupes vinyle terminaux.

La demande de brevet français N° 2 497 518 décrit un adhésif thermofusible qui est formé du produit de la copolycondensation de séquences polyamides à extrémités réactives avec des séquences polyéthers à extrémités réactives. Cette même demande de brevet décrit également des compositions adhésives thermofusibles contenant ce même adhésif thermofusible en association avec des additifs couramment employés dans de telles compositions adhésives thermofusibles, tels que: paraffine, cire de polyéthylène, ester de colophane, résine terpène-phénol, résine de pétrole alkyl-aromatique, copolymère éthylèneacétate de vinyle.

La question des scellements durables et parfaitement étanches métal/métal, par exemple pour certains travaux de tôlerie, ou métal/verre, par exemple pour des ampoules d'éclairage, et verre/verre, par exemple pour les doubles vitrages, sera envisagée ci-après avec référence spécifique aux doubles vitrages, pour lesquels les critères imposés sont les plus sévères.

Les doubles vitrages doivent remplir deux conditions primordiales, à savoir l'existence permanente d'une lame d'air sec évitant les condensations internes et la cohésion de l'ensemble.

La lame d'air sec peut être obtenue au moyen d'un agent dessiccant (gel de silice, tamis moléculaire, etc.) logé entre les deux vitres et de barrières contre l'humidité établies sur le contour du double vitrage. La cohésion de l'ensemble peut être réalisée par une soudure ou un collage.

La soudure du verre du lui-même ou à un cadre intercalaire métallique procure l'étanchéité et la cohésion parfaites, mais la mise en oeuvre, très difficile et onéreuse, a fait abandonner cette technique.

Un collage au moyen de polysulfures et plus rarement à l'aide d'autres polymères élastomères réticulés, qui sont appliqués à froid en mélange avec un catalyseur, ne procure pas une étanchéité parfaite, qui ne peut être atteinte que par l'application additionnelle d'un polymère d'hydrocarbure parfaitement hydrophobe mais de faible cohésion. La cohésion de l'ensemble est acquise grâce au second polymère réticulable, mais au prix d'une polymérisation assez lente (jusqu'à 24 heures) qui reste tributaire de la dose et de l'activité du catalyseur. En résumé, les élastomères réticulables conviennent pour une fabrication industrielle avec des moyens spécialisés, mais ne se prêtent guère aux travaux de l'artisan vitrier.

Une technique plus récente, qui est exposée dans le brevet français n° 7 314 086 est d'appliquer des agents de scellement thermofusibles ou hot melts, qui ne sont pas réticulés et permettent la mise en oeuvre immédiate. Un nouveau perfectionnement dans ce domaine est l'enduction sur trois faces des baguettes formant le cadre de part et d'autre duquel les deux vitres viennent se poser.

Les limitations de la technique actuelle sont liées au caractère thermofusible des agents de scellement, qui sont thermoplastiques réversibles: il existe un certain fluage à froid (et à fortiori à chaud) et dés lors si les unités sont stockées dans des conditions où les deux vitres ne sont pas soutenues simultanément à leur hord inférieur, la vitre non soutenue peut glisser vers le bas et, dans les cas graves, perdre l'étanchéité.

La présente invention a pour but d'améliorer la résistance au fluage d'assemblages réalisés au moyen de hot melts et en particulier la résistance au glissement asymétrique de doubles vitrages, par l'adjonction, aux compositions hot melts classiques, d'une résine qui confère à ces hot melts des propriétés satisfaisantes dans le domaine de la cohésion et celui de l'imperméabilité à la vapeur d'eau.

A cette fin, l'invention a pour objet un hot melt de constitution par ailleurs classigue comprenant au moins un constituant caoutchoutique et au moins un constituant résineux dans la composition duquel entre une "résine spéciale", miscible avec la masse caoutchoutique à l'échelle macroscopique, cette résine spéciale comportant les domaines de haute cohésion incompatibles avec la masse caoutchoutique à l'échelle moléculaire et des domaines de faible cohésion compatibles avec cette même masse caoutchoutique à l'échelle moléculaire. Cette résine spéciale confère une meilleure tenue au fluage, exerce certains effets synergiques et renforce le module de cette masse caoutchoutique, même pour de faibles élongations.

Outre ces constituants caoutchoutiques et résineux et la dite résine spéciale, la composition thermoplastique adhésive suivant l'invention peut comprendre d'autres constituants qui entrent habituellement dans la composition d'un hot melt et notamment des plastifiants, charges et/ou stabilisants.

Les hot melts suivant l'invention seront décrits ci-après en définissant de manière plus précise les divers constituants qu'ils comprennent ou peuvent comprendre, et les quantités relatives de ces constituants.

Dans la description donnée ci-aprés des compositions suivant l'invention, les quantités sont, sauf indication contraire, indiquees en parties en poids à 100 parties en poids du caoutchouc qui est l'un des constituants.

Les hot melts suivant l'invention comprennent toujours un certain nombre de constituants qui se répartissent en les catégories suivantes:

- les caoutchoucs

- les résines
- les "résines spéciales".

Suivant les quantités relatives et le type particulier des constituants faisant partie de ces trois premières catégories et suivant le genre particulier de composition souhaitée, les hot melts suivant l'invention peuvent comprendre en outre un ou plusieurs des constituants qui se répartissent en les catégories suivantes:
- les plastifiants
- les charges
- les stahilisants et divers.

Le caoutchouc compris dans les hot melts de l'invention constitue la hase élastomère qui a pour fonction d'absorber les chocs à basse température et de former la barrière contre la vapeur d'eau, outre de maintenir en dispersion les agents dits tackifiants qui sont les agents donnant un caractère poisseux au mélange auquel ils sont incorporés.

Les compositions spécifiques suivant la présente invention contiennent 100 parties en poids d'un ou plusieurs constituants caoutchoutiques qui consistent, au moins pour partie, en un ou plusieurs constituants caoutchoutiques "vierges" choisis parmi les polymères élastomères solides ayant un poids moléculaire d'environ 15.000 à 200.000 ou 300.000 ou plus. Parmi ces polymères et les noms commerciaux par lesquels ils sont parfois désignés, il y a notamment les caoutchoucs butyl tels que les copolymères d'isobutylène et d'isoprène, le polyisobutylène ("Vistanex L", les polymères de styrène/butadiéne ("GRS" et "Kraton SBS"), les polymères de styrène/isoprène ("Kraton S1S"), les polymères styrène/butadiène et styrène/isoprène hydrogénés ("Kraton SEBS"), et les caoutchoucs halogénés ("Parlon").

Le caoutchouc butyl utilisé suivant l'invention peut être un caoutchouc butyl quelconque ayant une viscosité Mooney (ML 1 + 3 à 127°C) d'environ 30 à 80, à savoir un homopolymère d'isobutylène ou bien un copolymère d'isobutylène avec une petite quantité, par exemple environ 1 à 5 moles %, d'un diène ou polyène conjugué tel que le butadiène, l'isoprène, le pipérylène ou le 2,3-diméthylbutadiène, entre autres. Ce caoutchouc butyl peut être faiblement réticulé et consister en l'un des produits conformes au brevet des Etats-Unis d'Amérique n° 3.674.735. Une préférence spéciale est donnée aux caoutchoucs butyl d'une viscosité Mooney telle que définie ci-dessus d'environ 50 à 60, correspondant à une masse moléculaire d'à peu près 450.000, qui ont un degré d'insaturation d'environ 1,5 mole % et, après vulcanisation à 150°C pendant 40 minutes d'un mélange normalisé, un module à 300% d'allongement d'environ 7 à 9 Mpa, une résistance à la rupture en traction d'environ 15 MPa et un allongement à la rupture de 450%. Un exemple d'un tel caoutchouc est le Polysar P301®.

Outre les constituants caoutchoutiques "vierges", tels qu'énumérés à titre d'exemples cidessus, les hot melts suivant l'invention peuvent également comprendre des caoutchoucs régénérés et/ou des caoutchoucs prévulcanisés.

Comme caoutchouc régénéré on peut utiliser, par exemple, un caoutchouc ayant une résistance à la rupture en traction de 8,8 ± 1,6 Mpa et un allongement à la rupture de 525 ± 40%. Comme caoutchouc prévulcanisé on peut notamment utiliser le caoutchouc Kalar 5214®.

Comme indiqué plus haut, la quantité formée par l'ensemble des constituants caoutchoutiques entrant dans la composition des hot melts suivant l'invention est considérée comme la quantité de référence, à savoir 100 parties en poids.

Il est généralement avantageux qu'au moins une part importante, c'est-à-dire au moins la moitié (au moins 50 parties) de cette quantité de constituants caoutchoutiques soit formée d'un ou plusieurs caoutchoucs "vierges", le complément (de 0 à 50 parties) pouvant être formé par des caoutchoucs régénérés et/ou des caoutchoucs prévulcanisés.

Les résines forment la seconde classe de constituants fonctionnellement importants des hot melts de l'invention. Elles peuvent être choisies notamment parmi les types suivants:

a) Résines d'hydrocarbures aliphatiques et les résines coumarone-indène, qui ont un point de ramollissement (bille et anneau) d'environ 100°C, du genre décrit dans le brevet des Etats-Unis d'Amérique 4.294.733, par exemple la résine Escorez® (Esso) prise en quantité s'élevant jusqu'à 500 parties et de préférence d'environ 165 parties. Une autre résine qui conviendrait est l'Imprez® (ICI).

Il est généralement avantageux qu'au moins une partie de la quantité de constituants résineux des hot melts suivant l'invention soit formée par une ou plusieurs résines d'hydrocarbures aliphatiques et/ou une ou plusieurs résines coumarone-indène. Ce sont notamment les résines de ce genre qui constituent les agents tackifiants de la composition.

b) Résines aromatiques (polymères de coupes en $C_8$) ou terpène-phénoliques, ayant un point de ramollissement (bille et anneau) s'élevant jusqu'à 200°C, par exemple la résine Nirez® ayant un point de ramollissement (bille et anneau) de 150°C prise en quantité s'élevant jusqu'à 300 parties et de préférence d'environ 100 parties. Une autre résine qui convient est la résine Piccofyn® (Hercules).

c) Résines EVA ou copolymères d'éthylène et d'acétate de vinyle, ayant un indice de fluidité à l'état fondu, dit habituellement MFI, n'excédant pas 700 et de préférence d'environ 25, par exemple une résine EVA à 28% d'acétate de vinyle ayant un MFI de 22 à 28, comme la résine Elvax® (Dupont), prise en quantité s'élevant jusqu'à 200 parties et de préférence d'environ 100 parties. Ce sont spécialement les résines EVA qui sont beaucoup utilisées dans toutes les compositions adhésives pour assurer un bon étalement et une bonne adhérence sur métaux.

La liste de résines indiquée ci-dessus n'est pas exhaustive, d'autres constituants résineux, et notamment ceux qui sont utilisés dans des compositions de hot melts connus, peuvent également entrer dans la

composition des hot melts suivant l'invention.

La quantité relative du ou des constituants résineux de la composition peut varier entre des limites assez larges suivant les résines utilisées et les propriétés particulières qu'on désire conférer au hot melt.

En règle générale, l'ensemble des constituants résineux incorporés dans la composition sera de 50 à 1000 parties et avantageusement de 100 à 500 parties.

La troisième classe de constituants essentiels des hot melts suivant l'invention est formée par les "résines spéciales" qui seront définies ci-après.

Tout comme les résines qui font partie de la seconde classe de constituants, telle que décrite cidessus, les "résines spéciales" font évidemment partie des très nombreuses substances nommées "résines".

Pour la description de l'objet de la présente invention, il est cependant utile de considérer ces "résines spéciales" comme formant une classe séparée de constituants, car c'est essentiellement l'incorporation de ces "résines spéciales" dans la composition qui constitue la nouveauté et l'originalité des hot melts suivant l'invention, par rapport aux hot melts connus.

C'est grâce à l'incorporation de ces "résines spéciales" que les hot melts suivant l'invention présentent des propriétés avantageuses, en comparaison avec des compositions de hot melts analogues qui ne comprennent pas ces "résines spéciales".

Les "résines spéciales", qui font partie de la troisième classe des constituants essentiels des hot melts suivant l'invention, sont des résines qui comportent des domaines de haute cohésion incompatibles avec la masse caoutchoutique à l'échelle moléculaire, mais qui sont miscibles à l'échelle macroscopique.

De manière générale, les résines qui, dans le présent mémoire descriptif, sont nommées "résines spéciales", font partie de la classe des copolymères à blocs ou multiséquencés, constitués de segments élastomériques et de segments rigides de haute cohésion.

De manière plus particulière, les dits segments élastomériques sont constitués de polyols, de polyéthers ou de polyesters et les segments rigides de haute cohésion sont constitués de poly(tétraméthylène téréphtalate), de polyuréthanes, de polyamides ou de copolyamides.

Des exemples de tels copolymères à blocs ou multiséquencés existant dans le commerce sont (désignés par leur nom commercial): Pebax (ATO) et Pellethane (Upjohn).

Ce sont ces copolymères séquencés qui confèrent aux hot melts de l'invention leur supériorité sur les produits analogues, en améliorant notamment la résistance au fluage à froid et même à chaud.

Suivant une forme d'exécution avantageuse de l'invention, ces copolymères séquencés consistent en des copolyétheresteramides qui sont formés du produit de la copolycondensation d'un polyamide ou copolyamide $\alpha,\omega$-dicarboxylique présentant un poids moléculaire de 300 à 15.000, et de préference 400 à 5000, employé à raison de 90 à 5% en poids, et d'un polyoxyalkylène $\alpha,\omega$-dihydroxylé aliphatique présentant un poids moléculaire de 100 à 6000, et de préference 200 à 5000, employé à raison de 10 à 95% en poids, le dit produit présentant une température de ramollissement (bille et anneau) comprise entre 80 et 210°C, et de préference 100 à 200°C et une viscosité à l'état fondu de 10 à 2000 pa.s à 200°C.

Selon un mode de réalisation, le dit produit de condensation comprend 60 à 20% du dit polyamide ou copolyamide et 40 à 80% du dit polyoxyalkylène $\alpha,\omega$-dihydroxylé.

De préference, la dite "résine spéciale" est un polyétheresteramide séquencé formé de CoPA 6.11/PPG/PTMG, PA 12/PTMG ou CoPA 6.12/PPG. On entend par

PPG: polyoxypropylèneglycol
PTMG: polyoxytétraméthylèneglycol
PA: polyamide
CoPA: copolyamide
6, 11 ou 12: respectivement le polyamide-6, 11 ou 12

De manière plus particulière, la dite résine spéciale peut consister en un copolyétheresteramide séquencé qui a une température de ramollissement (bille et anneau) de 120 à 190°C et une viscosité à l'état fondu de 100 à 800 Pa.s à 200°C, et qui répond à la formule:

$$HO - \left[ \underset{\substack{\| \\ O}}{C} - PA - \underset{\substack{\| \\ O}}{C} - O - PE - O \right]_n - H$$

où

PA représente un segment polyamide rigide d'un poids moléculaire approximatif de 500 à 2000, et
PE représente un segment polyéther souple d'un poids moléculaire approximatif de 1000 à 3000.

La quantité de résine spéciale dans la composition des hot melts suivant l'invention peut varier entre des limites assez larges. En général, les compositions comprendront de 1 à 300 parties d'une ou plusieurs résines spéciales, et plus particulièrement de 10 à 150 parties. Un exemple d'une telle résine spéciale est le Pebax® (ATO), qui est utilisée en quantité s'élevant jusqu'à 250 parties, de préférence de 10 à 150 parties et spécialement de 30 à 80 parties.

La quatrième classe de constituants que peuvent comprendre les hot melts de l'invention comprend les plastifiants, qui se divisent en:

a) Polyisobutylènes de faible masse moléculaire, à savoir de 50.000 au maximum, qui confèrent l'adhérence sur le verre, par exemple le Vistanex LM® pris en quantité s'élevant jusqu'à 500 parties et de préférence de 100 parties. Des polymères analogues qui conviendraient sont le polybutène Hyvis® (BP) et l'Indopol (Amoco).

b) Les polypropylènes atactiques, qui sont le résidu, soluble dans les hydrocarbures, de la polymérisation du propylène par le procédé Ziegler-Natta. Un tel polymère régularise le débit lors de l'application des hot melts. Un exemple en est le Vispol (Interchimica) pris en quantité s'élevant jusqu'à 250 parties et de préférence de 40 parties environ. Un autre agent utile de ce type est l'Afax® (Hercules).

c) Les huiles naphteniques, dont l'addition est facultative et vise à adapter la viscosité aux caractéristiques des machines d'extrusion. Des exemples en sont l'Enerthene® (BP) et le Coray® (Esso). La quantité d'huile naphténique pourrait s'élever jusqu'à 300 parties.

La cinquième classe de constituants que peuvent comprendre les hot melts de l'invention comprend les charges. Celles-ci ont pour fonction le renforcement, la protection contre le rayonnement ultraviolet et l'ahsorption du rayonnement infrarouge. Les charges peuvent être de type organique, comme le noir de carbone, par exemple FEF Sterling, pris en quantité s'élevant jusqu'à 300 parties et de préférence de 50 à 100 parties, ou bien de type minéral comme la craie, le talc, le dioxyde de titane, les fibres d'amiante, l'argile, la silice, entre autres, dont l'addition est facultative et peut atteindre 200 parties.

La sixième classe de constituants que peuvent comprendre les hot melts comprend les stabilisants et les additifs permettant d'optimaliser les propriétés du produit suivant les besoins.

Le stabilisant utilisé peut être tout stabilisant d'usage courant pour les caoutchoucs, matières plastiques et résines, par exemple l'Irganox 1010® (Ciba-Geigy), en quantité s'élevant jusqu'à 20 parties et de préférence de 3 à 5 parties.

Le couplage verre-hot melt peut être amélioré au moyen d'un organosilane couplé ou non à une résine époxy. Parmi les silanes utilisés, on peut citer ceux vendus sous les noms A-172, A-186, A-187, A-153 et A-151 (Union Carbide Corporation). Ces organosilanes sont utilisés à des concentrations allant par exemple de 0,5 à 30 parties et de préférence environ 15 parties.

L'invention est illustrée par les exemples spécifiques ci-après, avec référence aux dessins annexés dans lesquels:

Fig. 1 est une vue schématique latérale montrant l'assemblage d'une éprouvette pour épreuve au fluage,

Fig. 2 est une vue schématique latérale montrant l'assemblage d'une éprouvette pour épreuve d'adhésion par pelage à 180°;

Fig. 3 est une vue schématique latérale montrant une éprouvette pour épreuve de cisaillement dynamique;

Fig. 4 est une vue schématique latérale du montage pour la mesure du déplacement dans un double vitrage.

Dans les exemples, les propriétés utiles des hot melts sont mesurées et comparées au moyen des épreuves décrites ci-dessous.

<u>a. Fluage sur éprouvette ou cisaillement statique</u>

1 Comme indiqué à la Fig. 1, placer sur une surface plane, sucessivement une plaque d'acier galvanisé 1 (75 mm x 150 mm x 1 mm), une plaque de verre 2 (75 mm x 150 mm x 6 mm) protégée par du papier siliconé pour servir d'intercalaire et décalée de 35 mm, et une deuxième plaque de verre 3 de mêmes dimensions décalée de 10 mm par rapport à la plaque d'acier.

2 Extruder le hot melt 4 entre les plaques d'acier et de verre. Placer un poids de 10 kg sur l'ensemble et laisser refroidir pendant 30 minutes. Enlever le surplus de hot melt 4 au moyen d'un couteau chauffant, de façon à obtenir un joint de 25 mm x 75 mm x 6 mm.

3 Une heure après assemblage, enlever l'intercalaire de verre, marquer la position de la plaque d'acier par rapport au verre, suspendre l'éprouvette, par un trou ménagé dans la plaque d'acier, dans une étuve à 85 ± 2°C pendant 1 heure, verre en bas.

4 Retirer l'éprouvette de l'étuve et mesurer le glissement du verre depuis la marque initiale. Arrondir au millimètre.

<u>b. Adhésion-pelage à 180° sur éprouvette.</u>

1 Comme indiqué à la Fig. 2, préparer les éprouvettes en extrudant le hot melt 5 dans l'intervalle ménagé par une plaque de verre siliconé 6 (25 mm x 150 mm x 4 mm) entre une plaque de verre vierge propre 7 (25 mm x 150 mm x 4 mm) et une feuille d'aluminium neuve 8 (25 mm x 150 mm x 0,1 mm) posée sur une plaque de verre de support 9 (25 mm x 150 mm x 4 mm). Après extrusion, presser à la main et enlever le surplus pour obtenir une surface de scellement de 25 mm x 50 mm. Laisser refroidir environ 10 minutes et retirer la plaque de verre siliconé.

2 Conditionner les éprouvettes pendant 4 heures à température ambiante (23 ± 2°C) avant de les soumettre au vieillissement éventuel.

3 Après vieillissement, attendre que les éprouvettes soient à la température ambiante (60 minutes).

4 Ranger les éprouvettes dans la machine d'essai de traction fonctionnant à une vitesse de 50 mm/minute.

5 Toutes les valeurs de pelage doivent être mesurées à la température ambiante (23 ± 2° C).

6 L'épreuve de pelage consiste à arracher la feuille d'aluminium de la feuille de verre en formant un angle de 180° par rabattement de l'extrémité libre de la feuille d'aluminium.

7 La valeur d'adhésion est égale à la moyenne de 3 valeurs mesurées pour chaque conditionnement.

8 Dans le cas d'une rupture, il faut mentionner si elle est cohésive ou adhésive.

Elle est cohésive si elle survient au sein du hot melt Elle est adhésive si elle survient à la jonction du hot melt et du substrat et est, suivant le cas, appelée adhésive-verre ou adhésive-aluminium.

9 La précision est estimée à 15% par excès ou par défaut.

c. Epreuve par cisaillement dynamique

1. En procédant dans les mêmes conditions générales que pour le fluage et l'adhésion, avec un montage adapté, on prépare des éprouvettes telles que relrésentées à la Fig. 3, qui comprennent une plaque de verre 10 de 4 mm d'épaisseur, un scellement 11 de 25 mm x 25 mm en une épaisseur de 4 mm et une plaque d'acier galvanisé 12.

2 Après 24 heures de conditionnement à la température ambiante (23 ± 2° C), on exerce une traction de 10 mm/minute à 25° C à l'aide d'une machine de traction.

3 La valeur tabulée est la moyenne de 3 mesures.

d. Epreuve de fluage asymétrique

1 On constitue, comme illustré à la Fig. 4, des doubles vitrages 13 de 350 mm x 500 mm, dont les vitres 14, 15 d'une épaisseur de 4 mm sont séparées, par des intercalaires d'aluminium 16 de 12 mm de largeur remplis de tamis moléculaire de 3 Å, en réalisant l'assemblage par le procédé classique d'extrusion du hot melt 17.

2 On exécute l'épreuve de fluage asymétrique suivant la technique préconisée par l'Institut néerlandais KOMO sous la désignation K29 en retenant la vitre infèrieure 15 contre une butée 18, tandis qu'on sollicite la vitre supérieure 14, suivant le côté de 350 mm, au moyen d'un crochet 19 sur lequel un poids de 10 kg 20 exerce une traction par l'intermédiaire d'un fil 21 passant sur une poulie 22. Un comparateur d'une précision de 0,01 mm monté en 23 et dont le pointeau appuie sur la feuille de verre sous traction permet de mesurer les déplacements en fonction du temps.

L'invention est davantage illustrée, sans être limitée, par les exemples suivants.

Pour l'exécution des exemples, on prépare un certain nombre de hot melts dont la constitution est donnée au tableau I.

Tableau I

| | Hot melts | | | | | | | | |
|---|---|---|---|---|---|---|---|---|---|
| | 1 | 2 | 3 | 4 | 5 | 6 | 7 | 8 | 9 |
| Caoutchouc butyl | 74 | 74 | 74 | 74 | 74 | 74 | 74 | 74 | 74 |
| Butyle régénéré Vredestein P90R | 26 | 26 | 26 | 26 | 26 | 26 | 26 | 26 | 26 |
| Résine d'hydro-carbures Escorez 1304 | 122 | 122 | 122 | 122 | 122 | 122 | 122 | 122 | 122 |
| Résine terpène-phénolique Nirez 2150 | 74 | 74 | 74 | 74 | 74 | 74 | 74 | — | 74 |
| Copolyétherester-amide séquencé Pedax HMI | — | 20 | 44 | 88 | 44 | 44 | 44 | 44 | 44 |
| Copolymère éthylène-acétate de vinyle I* | 74 | 74 | 74 | 74 | — | 37 | — | 74 | 74 |
| Copolymère éthylène-acétate de vinyle I** | — | — | — | — | 74 | 37 | — | — | — |
| Polyisobuty-lène de bas poids moléc. Vistanex LM | 74 | 74 | 74 | 74 | 74 | 74 | 74 | 74 | 74 |
| Polypropylène atactique Vispol 3000 | 41 | 41 | 41 | 41 | 41 | 41 | 41 | 41 | 41 |
| Noir de carbone | 74 | 74 | 74 | 74 | 74 | 74 | 74 | 74 | 74 |
| Antioxydant | 4 | 4 | 4 | 4 | 4 | 4 | 4 | 4 | 4 |
| Organosilane A-172*** | — | — | — | — | — | — | — | — | 11 |

* Elvax, MFI = 25
** Elvax, MFI = 0,3
*** A-172: vinyltriméthoxyéthoxysilande

**Exemple 1**

**Influence de la teneur en copolyétheresteramide séquencé**

On exécute les épreuves de fluage sur éprouvette (ou cisaillement statique), d'adhésion - pelage à 180° et de dureté (Shore A) sur les hot melts 1, 2, 3 et 4.

Les résultats rassemblés au tableau II montrent à l'évidence que le copolyétheresteramide Pebax (hot melts 2, 3 et 4) est indispensable et agit efficacement déjà en faible concentration, les meilleurs résultats étant obtenus avec les hot melts comprenant au moins 44 parties de Pebax.

Tableau II

| Hot melt | Fluage à 85 °C pendant 1 h (mm) | Adhésion pelage 180° (N/cm) | Dureté (Shore A) |
|---|---|---|---|
| 1 | 45 | 80 | 52 |
| 2 | 10 | 118 | 47 |
| 3 | 4 | 90 | 42 |
| 4 | 3 | 88 | 32 |

**Exemple 2**

**Influence des copolymères d'éthylène et d'acétate de vinyle**

On exécute les mêmes épreuves que dans l'exemple 1 sur des hot melts dans lesquels la proportion de copolymère d'éthylène et d'acétate de vinyle varie.

Les résultats rassemblés au tableau III montrent que ces copolymères sont nécessaires (hot melts 5, 6 et 3) pour une bonne résistance au fluage, la meilleure adhérence étant conférée par un copolymère EVA ayant un MFI moyen (hot melt 3).

Tableau III

| Hot melt | Fluage (mm) 85 °C pendant 1 h | Adhésion pelage 180° (N/cm) |
|---|---|---|
| 5 | 5 | 74 |
| 6 | 4 | 79 |
| 3 | 4 | 90 |
| 7 | 11 | 72 |

**Exemple 3**

**Influence de la résine terpène-phénolique**

Outre l'épreuve de fluage et d'adhésion-pelage à 180°, on estime la viscosité à l'état fondu par extrusion au moyen d'un Monsanto Capillary Rheometer à 175°C sous 40 kPa, avec un capillaire 15:1.

Les résultats présentés au tableau IV montrent que la résine terpène-phénolique, bien qu'elle fasse baisser la résistance au fluage, confère une meilleure viscosité à l'état fondu (ce qui est important pour les pompes) et une meilleure adhérence.

Tableau IV

| Hot melt | Fluage (mm) 85 °C pendant 1 h | Adhésion pelage 180° (N/cm) | Viscosité (Poises) |
|---|---|---|---|
| 3 | 4 | 90 | 520 |
| 8 | 2 | 58 | 750 |

**Exemple 4**

**Résistance aux agents de vieillissement**

On soumet à différentes conditions de vieillissement, pendant une durée de 2 semaines, des éprouvettes pour épreuve d'adhésion-pelage et pour épreuve de cisaillement dynamique confectionnées au moyen des hot melts 1 et 3.

Les conditions de vieillissement sont:

1) A l'étuve à haute humidité (65°C, humidité relative de 95%)

2) Au bain d'eau à 60°C

3) Au bain d'eau à 25°C sous irradiation UV (conditions décrites dans la technique d'épreuve P10 de la "Sealed Insulating Glass Manufacturers Association" (SIGMA) E.U.A.)

4) En chaleur sèche à 60°C

5) Sous alternance de cycles climatiques de 6 heures comprenant

le heure: de 25°C à 60°C, avec pulvérisation simulant la pluie pendant les 30 premières minutes

2e heure: maintien à 60°C

3e heure: de 60°C à 25°C

4e heure: de 25°C à -30°C

5e heure: maintien à -30°C

6e heure: de -30°C à +25°C

de plus, pendant les 3 premières heures, vive irradiation UV (conformément à la norme ASTM EG-PI).

Pour les conditions 3 et 5, la face transparente est exposée au rayonnement UV.

Les résultats sont rassemblés au tableau V.

**Tableau V**
*Vieillissement accéléré*

| Conditions de vieillissement | Adhésion/pelage (N/cm) | | Cisaillement dynamique ($N/cm^2$) | |
|---|---|---|---|---|
| | Hot melt | | Hot melt | |
| | 1 | 3 | 1 | 3 |
| Initial | 80 | 90 | 20,4 | 21,7 |
| Haute humidité | 55 | 81 | 20,0 | 22.4 |
| Eau chaude | 65 | 84 | 21,2 | 23,3 |
| Eau + UV | 85 | 107 | 14,7 | 15,4 |
| Chaleur | 69 | 76 | 20,6 | 22,0 |
| Cycles climatiques | 57 | 71 | 13,2 | 15,1 |

On peut conclure que le copolyétheresteramide séquencé a une action bénéfique sur le maintien des propriétés d'adhésion sous diverses conditions de vieillissement.

**Exemple 5**

**Effet du copolyétheresteramide séquencé dans les vitrages lourds**

On exécute sur des doubles vitrages assemblés au moyen des hot melts 1 et 3, appliqués de manière classique, une épreuve de déplacement relatif, telle qu'elle est décrite au paragraphe d, page 14, qui permet de simuler, dans une certaine mesure, les charges qui existent dans des doubles vitrages de très grandes dimensions, tout en travaillant à une échelle commode.

Les résultats présentés au tableau VI montrent que la résistance au fluage des vitrages très sollicités est considérablement améliorée par le copolyétheresteramide séquencé.

**Exemple 6**

**Effet du copolyétheresteramide séquencé dans les vitrages lourds montés sur baguettes enduites**

On exécute les mêmes expériences que dans l'exemple 5 sur des doubles vitrages assemblés au moyen de baguettes intercalaires préalablement enduites sur 3 côtés.

Les résultats, présentés au tableau VI, démontrent la même utilité du copolyétheresteramide séquencé.

**Tableau VI**
*Déplacement relatif (mm) d'un vitrage sous charge de 10 kg (test Komo K24)*

| Temps d'application de la charge | Unité classique | | Enduction 3 côtés | |
|---|---|---|---|---|
| | Hot melt | | Hot melt | |
| | 1 | 3 | 1 | 3 |
| 10 minutes | 0,37 | 0,04 | 0,06 | 0,03 |
| 24 heures | 1,48 | 0,26 | 0,23 | 0,08 |
| 7 jours | 2,00 | 0,40 | 0,64 | 0,14 |

En outre, la comparaison entre les résultats atteints suivant la technique classique (extrusion) et l'enduction 3 côtés montre que le facteur d'amélioration offert par un hot melt de l'invention est à peu près le même dans les deux cas.

**Exemple 7**

**Effet du vinyltriméthoxyéthoxysilane sur la tenue aux U.V. combinés avec de l'eau**

On immerge des doubles vitrages assemblés au moyen des hot melts 3 et 9, appligués de manière classique, dans un bain d'eau, jusqu'à approximativement 5 cm en dessous du niveau.

On expose l'ensemble aux rayons ultra-violets, au moyen de 2 lampes U.V. Parmi ces lampes, on peut citer celles vendues sous la référence "PHILIPS MLU 300 W B22 3 U.V.". On contrôle visuellement une pénétration d'eau dans le double vitrage, par le décollement qui se produit entre le verre et le hot melt, provogué par bombardement U.V.. On chiffre ainsi le nombre de jours d'exposition minimum qu'il faut sur un nombre d'échantillons soumis à ce test, pour que l'eau pénètre dans le double vitrage. Les résultats sont rassemblés au tableau VII.

**Tableau VII**
*Nombre de jours minimum avant la pénétration d'eau dans le double vitrage.*

| Hot melt | min. jours |
|---|---|
| 3 | 40 |
| 9 | 120 |

On constate ainsi l'augmentation considérable de la durée de vie d'un double vitrage soumis aux conditions décrites précédemment, quand ce double vitrage est realisé avec le hot melt (9) qui contient un agent de couplage avec le verre, en l'occurrence le vinyltriméthoxyéthoxysilane, comme dans l'exemple cité.

En résumé, l'invention procure de nouveaux hot melts qui ont une meilleure resistance au fluage, qui se prêtent à l'application suivant des techniques classiques, (pompe à plateau suiveur et pistolet) ou des techniques d'enduction sur 3 côtés, qui ont une dureté plus faible et une meilleure résistance aux chocs (facilité de transport et de manipulation), qui résistent mieux au vieillissement, qui résistent mieux au gonflement du double vitrage sous l'effet des différences de température et qui résistent mieux aux surcharges asymétriques que les hot melts ne contenant pas la résine spéciale utilisée dans les compositions de l'invention.

**Revendications**

1.- Composition thermoplastique adhésive, comprenant au moins un constituant caoutchoutique et au moins un constituant résineux, caractérisée en ce que le constituant caoutchoutique a un poids moléculaire d'au moins 15.000 et en ce que le constituant résineux consiste en une résine spéciale et au moins un autre constituant résineux, la dite résine spéciale étant un copolyétheresteramide séquencé consistant en un produit de copolycondensation d'un polyamide ou copolyamide α,ω-dicarboxylique présentant un poids moléculaire de 300 à 15.000, employé à raison de 30 à 5% en poids, et d'un polyoxyalkylène α,ω-dihydroxylé aliphatique présentant un poids moléculaire de 100 à 6.000, employé à raison de 10 à 95% en poids, le dit produit de polycondensation présentant une température de ramollissement (bille et anneau) comprise entre 80 et 210°C et une viscosité à l'état fondu de 10 à 2.000 Pa.s à 200°C, et le dit hutre constituant résineux étant au moins une résine choisie parmi:

(a) une résine d'hydrocarbure aliphatique et/ou une résine coumarone-indène;
(b) une résine terpène-phénolique, et
(c) un copolymère éthylène-acétate de vinyle.

2.- Composition suivant la revendication 1, caractérisée en ce que le dit copolyétheresteramide séquencé présente une température de ramollissement (bille et anneau) comprise entre 100 et 200°C et consiste en un produit de polycondensation d'un polyamide ou copolyamide présentant un poids moléculaire de 400 à 5000, employé à raison de 60 à 20% en poids et d'un polyoxyalkylène α,ω-dihydroxylé aliphatique présentant un poids moléculaire de 200 à 5000, employé à raison de 40 à 80% en poids.

3.- Composition suivant l'une quelconque des revendications précédentes, caractérisée en ce qu'elle contient 1 à 300 parties en poids de la dite résine spéciale pour 100 parties en poids de constituant caoutchoutique.

4.- Composition suivant la revendication 3, caractérisée en ce qu'elle contient 10 a 150 parties en poids de la dite résine spéciale pour 100 parties en poids de constituant caoutchoutique.

5.- Composition suivant l'une quelconque des revendications précédentes, caractérisée en ce qu'elle comprend en outre au moins un constituant plastifiant.

6.- Composition suivant l'une quelconque des revendications précédentes, caractérisée en ce qu'elle comprend en outre au moins une charge.

7.- Composition suivant l'une quelconque des revendications précédentes, caractérisée en ce qu'elle comprend en outre au moins un stabilisant.

8.- Utilisation d'une composition suivant l'une quelconque des revendications précédentes pour le scellement de doubles vitrages.

## Patentansprüche

1.- Klebende thermoplastische Zusammensetzung, welche wenigstens einen Kautschukbestandteil und wenigstens einen Harzbestandteil aufweist, dadurch gekennzeichnet, dass der Kautschuckbestandteil einen Molekulargewicht von wenigstens 15000 hat und der Harzbestandteil aus einem speziellem Harz und wenigstens einem anderen Harzbestandteil besteht, wobei das spezielle Harz ein Sequenz-Copolyetheresteramid, bestehend aus einem Polykondensationsprodukt eines im Verhältnis von 90 bis 5 Gew. % eingesetzten α,ω-Dicarboxypolyamids oder - copolyamids mit einem Molekulargewicht von 300 bis 15000 mit einem im Verhältnis von 10 bis 95 Gew. % eingesetzten aliphatischen α,ω-Dihydroxypolyoxyalkylen mit einem Molekulargewicht von 100 bis 6000 ist, wobei dieses Polykondensationsprodukt eine Erweicherungstemperatur (Ring und Kugel) zwischen 80 und 210°C und eine Viskosität im geschmolzenen Zustand von 10 bis 200 Pa.s bei 200°C aufweist, und wobei der andere Harzbestandteil unter wenigstens einem von dem Harzen gewäht wird :

a) ein aliphatisches Kohlenwasserstoff Harz und/oder ein Kumaren/Inden Harz;

b) ein Terpene/Phenol Harz, und

c) ein Äthylen/Vinylacetat copolymer.

2.- Zusammensetzung nach Anspruch 1, dadurch gekennzeichnet, dass das Sequenz-Copolyetheresteramid eine Erweicherungstemperatur (Ring und Kugel) zwischen 100 und 200°C aufweist und aus einem Polykondensationsprodukt eines im Verhältnis von 60 bis 20 Gew. % eingesetzten Polyamides oder Copolyamides mit einem Molekulargewicht von 400 bis 5000 und einem im Verhältnis von 40 bis 80 Gew. % eingesetzten aliphatischen α,ω -Dihydroxypolyoxyalkylen mit einem Molekulargewicht von 200 bis 5000 besteht.

3.- Zusammensetzung nach irgendeinem der vorhergehenden Ansprüche, dadurch gekennzeichnet, dass sie 1 bis 300 Gewichtsteile des speziellen Harzes je 100 Gewichtsteile Kautschukbestandteile enthält.

4.- Zusammensetzung nach Anspruch 3, dadurch gekennzeichnet, dass sie 10 bis 150 Gewichtsteile des speziellen Harzes je 100 Gewichsteile Kautschukbestandteile enthält.

5.- Zusammensetzung nach irgendeinem der Vorhergehenden Ansprüche, dadurch gekennzeichnet, dass sie ausserdem wenigstens einem plastifizierenden Bestandteil enthält.

6.- Zusammensetzung nach irgendeinem der Vorhergehenden Ansprüche, dadurch gekennzeichnet, dass sie ausserdem wenigstens einem Füllstoff enthält.

7.- Zusammensetzung nach irgendeinem der Vorhergehenden Ansprüche, dadurch gekennzeichnet, dass sie ausserdem wenigstens ein Stabilisierungsmittel enthält.

8.- Anwendung einer Zusammensetzung nach irgendeinem der Vorhergehenden Ansprüche zum Verkittern von Doppelverglasungen.

## Claims

1.- An adhesive thermoplastic composition comprising at least one rubbery constituent and at least one resinous constituent, wherein the rubbery constituent has a molecular weight of at least 15000 and the resinous constituent contains a special resin and at least one other resinous constituent, the said special resin being a block copolyetheresteramide consisting of a product resulting from the copolycondensation of an α,ω-dicarboxylic polyamide or copolyamide having a molecular weight of 300 to 15000, employed in an amount of 90 to 5% by weight, and of an aliphatic α,ω-dihydroxylated polyoxyalkylene having a molecular weight of 100 to 6000, employed in an amount of 10 to 95% by weight, the said polycondensation product having a softening point (ball and ring) of between 80 and 210°C and a viscosity in the molten state of 10 to 2000 Pa.s at 200°C, and the said other resinous constituent being at least one resin chosen from amongst:

a) an aliphatic hydrocarbon resin and/or a coumarone/indene resin;,

b) a terpene-phenolic resin, and

c) an ethylene/vinylacetate copolymer.

2.- A composition as claimed in claim 1, wherein the said block copolyetheresteramide has a softening point (ball and ring) of between 100 and 200°C and consists of a product resulting from the polycondensation of a polyamide or copolyamide having a molecular weight of 400 to 5000, employed in an amount of 60 to 20% by weight, and of ad aliphatic, α, ωdihydroxylated polyoxyalkylene having a molecular weight of 200 to 5000, employed in an amount of 40 to 80% by weight.

3.- A composition as claimed in any one of the preceding claims, which contains 1 to 300 parts by weight of said special resin per 100 parts by weight of the rubbery constituent.

4.- A composition as claimed in claim 3, which contains 10 to 150 parts by weight of said special resin per 100 parts by weight of the rubbery constituent.

5.- A composition as claimed in any one of the preceding claims, which also comprises at least one plasticizing constituent.

6.- A composition as claimed in any one of the preceding claims, which also comprises at least one filler.

7.- A composition as claimed in any one of the preceding claims, which also comprises at least one stabilizer.

8.- Use of a composition as claimed in any one of the preceding claims, for sealing double glazing units.

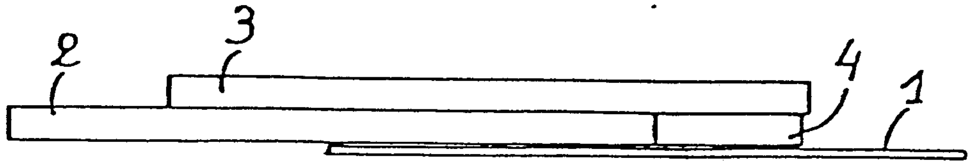


Fig. 1

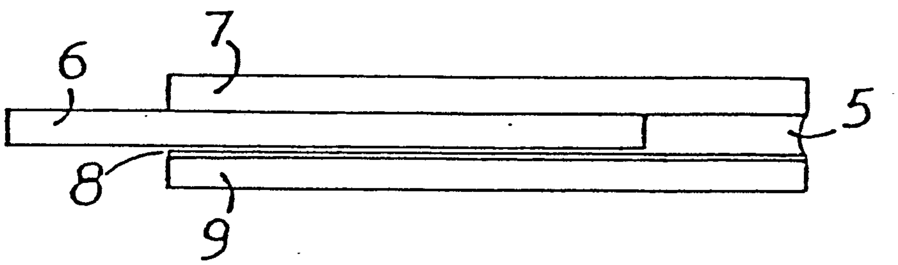


Fig. 2

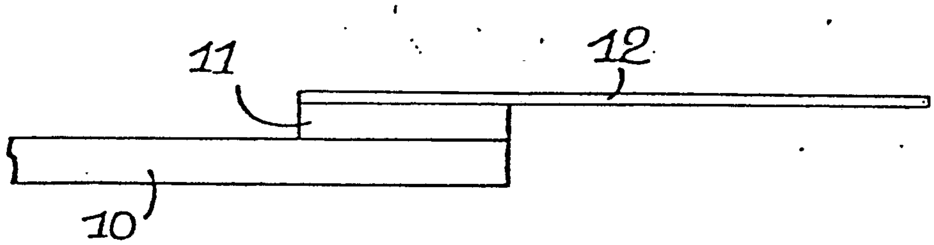


Fig. 3

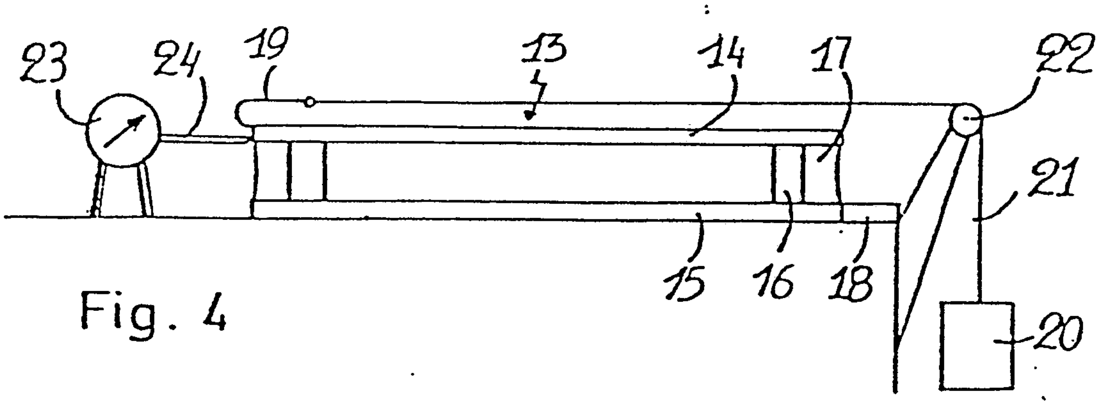


Fig. 4